Europäisches Patentamt

(19) European Patent Office

Office européen des brevets

(11) Publication number: **0 323 417 B1**

(12) **EUROPEAN PATENT SPECIFICATION**

(45) Date of publication of patent specification :
17.07.91 Bulletin 91/29

(51) Int. Cl.⁵: **B60S 1/34**

(21) Application number : 88830565.3

(22) Date of filing : 27.12.88

(54) A variable-radius windscreen wiper device for motor vehicles.

(30) Priority : 29.12.87 IT 5393087 U

(43) Date of publication of application :
05.07.89 Bulletin 89/27

(45) Publication of the grant of the patent :
17.07.91 Bulletin 91/29

(84) Designated Contracting States :
DE ES FR GB IT SE

(56) References cited :
EP-A- 0 180 142
FR-A- 1 053 519

(73) Proprietor : INDUSTRIE MAGNETI MARELLI
S.p.A.
Via Adriano 81
I-20128 Milano (IT)

(72) Inventor : Pedani, Giuseppe
Via Pacini 66
I-20131 Milano (IT)

(74) Representative : Buzzi, Franco et al
c/o Jacobacci-Casetta & Perani S.p.A. Via
Alfieri, 17
I-10121 Torino (IT)

Jouve, 18, rue Saint-Denis, 75001 PARIS

## Description

The present invention relates in general to windscreen wiper devices for motor vehicles.

The invention particularly concerns a variable-radius windscreen wiper device of the type comprising a motor-driven operating pin which is movable with a reciprocating rotary motion and drives a box carrying an attachment pin for a wiper arm, and a fixed gear which is coaxial with the operating pin and meshes with an idler gear supported rotatably by the box and meshed with a final gear connected to the attachment pin for rotation therewith.

In variable-radius windscreen wiper devices of the type defined above, described for example in EP-A-180 142, the operating pin is inserted through a tubular support formed with the box and on the outside of which a hub part of the fixed gear is mounted with the interposition of sliding bushes.

This solution is relatively complex and expensive, particularly because of the difficulties connected with the production of the box with the tubular support appendage.

A variable-radius windscreen wiper device of the type defined at the beginning, which has a simpler, cheaper and more functional conformation, is disclosed in FR-A-1053519, wherein the operating pin acts directly as a support for the fixed gear.

This solution, however, involves manufacturing problems deriving from difficulties of assembling and setting of the toothed members of the device.

The object of the invention is that of avoiding such a drawback, considerably facilitating the production of the device, without affecting its reliability and operative functionality.

According to the invention this object is achieved by means of a variable-radius windscreen wiper device of the above-mentioned type (FR-A-1 053 519), characterised in that removable pre-assembly means are provided for connecting the fixed gear to the box during assembly of the device.

The invention will now be described in detail with reference to the appended drawings, provided purely by way of non-limiting example, in which :

Figure 1 is a schematic cross-section of a variable-radius windscreen wiper device according to the invention.

Figure 2 is a partially-sectioned plan view from below, taken on the arrow II of Figure 1, and

Figure 3 is a cross-section taken on the line III-III of Figure 1.

With reference to the drawings, a variable-radius windscreen wiper device according to the invention is generally indicated 1. This device is of generally known type and briefly comprises an operating pin 2 one end of which is connected to a motor-driven drive member 3 adapted, in known manner, to move the pin 2 with a reciprocating rotary motion. The other end of the operating pin 2 is carried by a box 4 which is movable with a reciprocating rotary motion together with the pin 2 and at one end carries an attachment pin 5 to which a wiper arm, not illustrated, provided with a wiper blade, is connected in known manner.

A final gear 6 is fixed for rotation with the attachment pin 5 and meshes with an intermediate gear 7 which is freely rotatable within the box 4 by means of a pin 8 and is meshed with a fixed gear 9. The fixed gear 9 is fixed to the structure of the vehicle at 10 and has a tubular hub part 11 coaxial with the operating pin 2.

According to the invention, the tubular hub part 11 of the fixed gear 9 is mounted directly on the operating pin 2, possibly with the interposition of a sliding sleeve 12 for enabling the operating pin 2 to rotate relative to the fixed gear 9. The latter may be of self-lubricating plastics material, or, alternatively, of sintered alloys. In the latter case, the sliding sleeve 12 may be omitted.

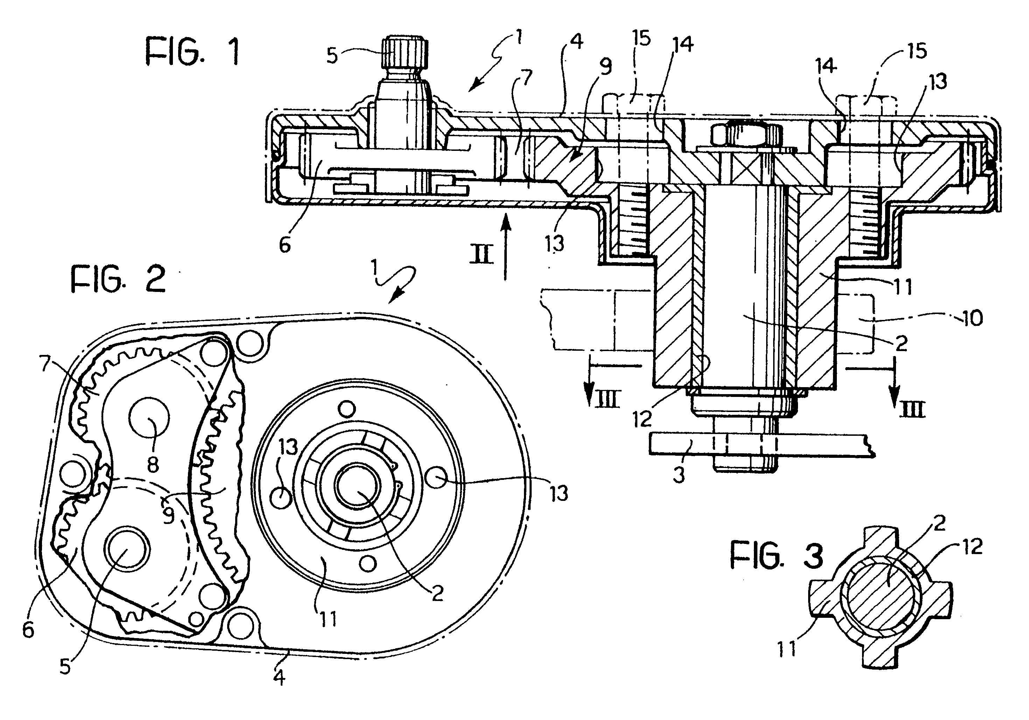

As can be seen in Figure 3, the tubular hub part 11 has a wall with regions whose thickness is reduced for reasons of lightness.

In order to facilitate the assembly of the device 1, the fixed gear 9 conveniently has a pair of axial threaded holes 13 which are adapted to be aligned during assembly with corresponding holes 14 in the box 4, for the insertion of respective screws 15 for clamping the gear 9 to the box 4 until the device has been mounted on the structure of a motor vehicle. After mounting, the screws 15 are removed so as to enable the free movement of the operating pin 2 and thus of the box 4 relative to the fixed gear 9.

In operation, the combined rotation of the attachment pin 5 about the axis of the operating pin 2 (together with the box 4) and about its own axis enables the achievement of a variable-radius movement of the windscreen wiper blade over the surface to be wiped to be achieved, so as to extend the area wiped.

## Claims

1. A variable-radius windscreen wiper device for motor vehicles, comprising a motor-driven operating pin (2) which is movable with a reciprocating rotary motion and drives a box (4) carrying an attachment pin (5) for a wiper arm, and a fixed gear (9) which is coaxial with the operating pin (2) and meshes with an idler gear (7) supported rotatably by the box (4) and meshed with a final gear (6) connected to the attachment pin (5) for rotation therewith, wherein the operating pin (2) acts directly as a support for the fixed gear, characterised in that it includes removable preassembly means (15) for connecting the fixed gear (9) to the box (4) during the assembly of the device (1).

2. A windscreen wiper device according to Claim 1, characterised in that the fixed gear (9) has a tubular hub portion (11) which is mounted on the operating pin (2) with the possible interposition of a sliding bush (12).

## Ansprüche

1. Scheibenwischer-Vorrichtung mit veränderlichem Radius für Kraftfahrzeuge, umfassend einen motorgetriebenen Antriebsstift (2), der in eine hin- und hergehende Drehbewegung versetzbar ist und einen Kasten (4) antreibt, das einen Befestigungsstift (5) für einen Wischarm trägt, sowie ein festes Zahnrad (9), das koaxial mit dem Antriebsstift (2) angeordnet ist und in ein Leerlaufrad (7) eingreift, welches drehbar von dem Kasten (4) gestützt ist und wiederum in ein Endrad (6) greift, das mit dem Befestigungsstift (5) zu seiner Drehung mit diesem verbunden ist, worin der Antriebsstift (2) direkt als Stütze für das feste Zahnrad dient, **dadurch gekennzeichnet,** daß sie entfernbare Vormontagevorrichtungen (15) zur Verbindung des festen Zahnrades (9) mit dem Kasten (4) während des Zusammenbaus der Vorrichtung (1) aufweist.

2. Scheibenwischer-Vorrichtung nach Anspruch 1, **dadurch gekennzeichnet,** daß das feste Zahnrad (9) einen rohrförmigen Naben-Abschnitt (11) aufweist, der auf dem Antriebsstift (2) unter möglicher Zwischenfügung einer Gleithülse (12) angeordnet ist.

## Revendications

1. Dispositif d'essuie-glaces à rayon variable pour véhicules automobiles, comprenant un axe d'actionnement (2) entraîné par un moteur, qui est susceptible d'être affecté d'un mouvement rotatif de va-et-vient et qui entraîne un boîtier (4) portant un axe de fixation (5) destiné à un bras d'essuie-glace, et une roue dentée fixe (9) qui est coaxiale à l'axe d'actionnement (2) et qui engrène sur une roue dentée folle (7) supportée de façon rotative par le boîtier (4) et engrénant avec une roue dentée finale (6) reliée à l'axe de fixation (5) en vue de tourner avec celui-ci, l'axe d'actionnement (2) jouant directement le rôle d'un support pour la roue dentée fixe, caractérisé en ce qu'il comporte des moyens (15) de pré-assemblage destinés à relier la roue dentée fixe (9) au boîtier (4) au cours de l'assemblage du dispositif (1), et susceptibles d'être enlevés.

2. Dispositif d'essuie-glaces selon la revendication 1, caractérisé en ce que la roue dentée fixe (9) comporte une partie tubulaire (11) formant moyeu qui est montée sur l'are d'actionnement (2), avec interposition éventuelle d'une bague de glissement (12).

FIG. 1

FIG. 2

FIG. 3